# EUROPEAN PATENT APPLICATION

(11) **EP 2 641 867 A1**
(43) Date of publication of application: **25.09.2013**
(21) Application number: 12191196.0
(22) Date of filing: 05.11.2012
(51) Int. Cl.: C01B 25/45, C01B 31/02, H01M 4/136, H01M 4/58, H01M 4/62, H01M 10/0525

(54) **Method of preparing carbon nanotube-olivine type lithium manganese phosphate composites and lithium secondary battery using the same**

(30) Priority: 23.03.2012 KR 20120030123
(71) Applicant: Samsung Corning Precision Materials Co., Ltd., Gyeongsangbuk-do 730-725 (KR)
(72) Inventor: Shim, Hyung Cheoul, 336-841 Chungcheongnam-do (KR); Bang, Sung Rok, 336-841 Chungcheongnam-do (KR); Yoon, Dong Myung, 336-841 Chungcheongnam-do (KR)
(74) Representative: Gulde Hengelhaupt Ziebig & Schneider

(57) **Abstract**

Provided are a method of preparing carbon nanotube-olivine type lithium manganese phosphate composites and a lithium secondary battery using the same. The method includes acid-treating a carbon nanotube to purify the carbon nanotube by adding an acid solution to the carbon nanotube, forming a precursor mixture of the carbon nanotube and a metal precursor of olivine type lithium manganese phosphate, and heat-treating the precursor mixture. The carbon nanotube-olivine type lithium manganese phosphate composites can provide high energy density per unit volume and can improve output characteristics.

## Description

The present invention relates to a method of preparing carbon nanotube-olivine type lithium manganese phosphate composites and a lithium secondary battery using the same.

### DESCRIPTION OF THE RELATED ART

As lithium secondary batteries are widely used in small-sized electronic devices, electric vehicles and power storages, there is an increasing demand for a positive electrode material for a secondary battery having high safety, long life span, high energy density and high output characteristic. In recent years, active materials that are environmentally friendly because they do not use detrimental heavy metals such as cobalt (Co) have been increasingly used. In particular, high-stability positive active materials, such as olivine type lithium manganese phosphate, are gradually expanding their application areas.

However, since the olivine type lithium manganese phosphate has much lower electric conductivity than the conventional positive active material, theoretical characteristics are difficult to demonstrate. To solve the problem, methods have been proposed to improve electric conductivity by substituting a transition metal such as CO, Ni or Mn, or a non-transition metal such as Mg, Ca, Zn or Sr, to olivine type lithium manganese phosphate. In addition, methods of coating a high conductivity material on a surface of the olivine type lithium manganese phosphate have also been proposed. For example, there is a method of improving the filling density and electric conductivity of a positive active material by coating thermosetting molecules such as polyethylene or polypropylene powder on a surface of the olivine type lithium manganese phosphate. However, according to the conventional methods, materials coated on the surface of the olivine type lithium manganese phosphate may not be adhered well, or coagulation may occur between coating materials. In addition, it is difficult to attain satisfactory levels of energy density per unit volume and output characteristic of battery.

### SUMMARY OF THE INVENTION

Aspects of the present invention provide a method of preparing carbon nanotube-olivine type lithium manganese phosphate composites, which can provide high energy density per unit volume and can improve output characteristics by facilitating charge movement between positive active materials.

Aspectsof the present invention further provide a positive electrode composition including carbon nanotube-olivine type lithium manganese phosphate composites prepared by the method described above.

Aspectsof the present invention further provide a lithium secondary battery using the positive electrode composition.

According to aspects of the present invention, there is provided a method of preparing carbon nanotube-olivine type lithium manganese phosphate composites and a lithium secondary battery using the same, the methodincluding acid-treating a carbon nanotube to purify the carbon nanotube by adding an acid solution to the carbon nanotube, forming a precursor mixture of the carbon nanotube and a metal precursor of olivine type lithium manganese phosphate, and heat-treating the precursor mixture. The carbon nanotube-olivine type lithium manganese phosphate composites can provide high energy density per unit volume and can improve output characteristics.

According to aspects of the present invention, a positive electrode composition is provided, the positive electrode composition including the carbon nanotube-olivine type lithium manganese phosphate composites.

According to aspects of the present invention, a lithium secondary battery is provided, the lithium secondary battery manufactured using the positive electrode composition.

As described above, in the method of preparing carbon nanotube-olivine type lithium manganese phosphate composites, since a metal precursor and a carbon nanotube are mixed and thensintered, the efficiency of electron transfer between lithium manganese phosphates, charge movement between positive active materials can be facilitated, thereby providing high energy density per unit volume and improving output characteristics.

In addition, in the carbon nanotube-olivine type lithium manganese phosphate composites according to the present invention, the rate characteristic of a positive active material and the capacity retention ratio of battery can be improved. In addition, the safety of battery can be improved by improving adhesion between a current collector and an active material in the manufacture of an electrode.

Additional aspects and/or advantages of the invention will be set forth in part in the description which follows and in part will be obvious from the description or may be learned by practice of the invention.

### BRIEF DESCRIPTION OF THE DRAWINGS

The aspects, features and advantages of the present invention will be more apparent from the following detailed description in conjunction with the accompanying drawings, in which:
FIG. 1 schematically illustrates electron transfer efficiency of carbon nanotube-olivine type lithium manganese phosphate composites according to the present invention;
FIG. 2 is a scanning electron microscopy (SEM) image illustrating carbon nanotube-olivine type lithium manganese phosphate composite powder according to an embodiment of the present invention;
FIG. 3 shows battery capacity charging/discharging curves of a lithium secondary battery using the carbon nanotube-olivine type lithium manganese phosphate composites according to an embodiment of the present invention;
FIG. 4 shows rate-characteristic curves of a lithium secondary battery using the carbon nanotube-olivine type lithium manganese phosphate composites according to an embodiment of the present invention; and

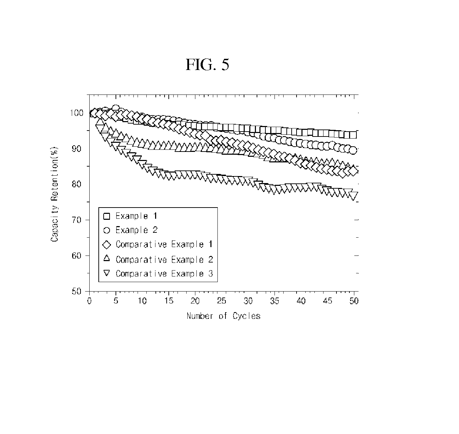

FIG. 5 shows cycle lifetime characteristic curves of a lithium secondary battery using the carbon nanotube-olivine type lithium manganese phosphate composites according to an embodiment of the present invention.

### DETAILED DESCRIPTION OF THE INVENTION

Hereinafter, examples of embodiments of the invention will be described in detail with reference to the accompanying drawings such that they can easily be made and used by those skilled in the art.

The present invention provides a method of preparing carbon nanotube-olivine type lithium manganese phosphate composites. The preparation method may include acid-treating a carbon nanotube, forming a precursor mixture, and heat-treating the precursor mixture.

The acid-treating of the carbon nanotube comprises purifying the carbon nanotube by adding the carbon nanotube to an acid solution. The acid-treating of the carbon nanotube improves purity by removing catalyst and amorphous carbon, and can improve affinity and dispersity of the olivine type lithium manganese phosphate with the metal precursor by forming a carboxyl group on a wall surface of the carbon nanotube.

The acid-treating of the carbon nanotube comprises agitating the carbon nanotube with the acid solution at a temperature of 50 to 80 °C for 6 to 12 hours, washing using distilled water and drying at a temperature of 100°C or below.

The carbon nanotube has a diameter of 1 nm or greater, preferably 5 to 50 nm, and more preferably 5 to 10 nm. In addition, the carbon nanotube has a length of 10 µm or greater, preferably 10 µm to 50 µm. In addition, the carbon nanotube may have various shapes including single wall carbon nanotube, multi wall carbon nanotube, rope carbon nanotube, or the like. Preferably, the carbon nanotube may be multi wall carbon nanotube. For example, the number of side walls of the multi wall carbon nanotube is in a range of 6 to 20. The inner diameter of the carbon nanotube may be 10 nm or less and the outer diameter of the carbon nanotube may be 15 nm or greater.

The acid-treated carbon nanotube demonstrates a peak intensity ratio of 1 or greater, preferably 1 to 2.0, measured around 1580⁻¹ peak (I_{G}) and 1350 cm⁻¹ peak (I_{D})by Raman spectroscopy(1024 nm laser wavelength), and purity of 95% or greater.

The acid solution includes at least one of sulfuric acid, nitric acid and chloric acid and is an acidic solution having a mole concentration of 1 to 6 M. Preferably, the acid solution is prepared by mixing sulfuric acid and nitric acid in a ratio of 3:1 (w/w). In addition, in order to improve dispersion of the carbon nanotube, the carbon nanotube may further include a dispersant.

The forming of the precursor mixture comprises mixing the acid-treated carbon nanotube and metal precursor powder of olivine type lithium manganese phosphate. In the forming of the precursor mixture, the precursor mixture having the acid-treated carbon nanotube uniformly dispersed therein is prepared using a milling process employed to a solid-state reaction when preparing an oxide. The milling process may include Raymond mill, hammer mill, con crusher, roller mill, rod mill, ball mill, wheeler mill, attrition mill, and so on. In addition, the forming of the precursor mixture may be performed under reducing atmosphere using, for example, nitrogen gas, argon gas, hydrogen gas, and mixed gases thereof.

The metal precursor may be at least one selected from the group consisting of, as represented by the Formula 1, hydroxide, ammonium, sulfate, alkoxide, oxalate, phosphate, halide, oxyhalide, sulfide, oxide, peroxide, acetate, nitrate, carbonate, citrate, phthalate, perchlorate, acetylacetonate, acrylate, formate and oxalate compounds including at least one selected from the group consisting of Mn, P, Fe, Ni, Zr, Co, Mg, Mo, Al, Ag, Y and Nb, and hydrides thereof.

In addition, the metal precursor may at least one selected from the group consisting of lithium-containing hydroxide, ammonium, sulfate, alkoxide, oxalate, phosphate, halide, oxyhalide, sulfide, oxide, peroxide, acetate, nitrate, carbonate, citrate, phthalate, perchlorate, acetylacetonate, acrylate, formate and oxalate compounds and hydrides thereof.

The acid-treated carbon nanotube may be contained in an amount of 1 to 20 wt%, preferably 3 to 15 wt%, and more preferably 3 to 6 wt%, based on the weight of the metal precursor. If the amount of the acid-treated carbon nanotube is within the range stated above, the carbon nanotube is dispersed well, thereby improving electron transfer efficiency of the composite and improving adhesion between the carbon nanotube and a current collector.

The heat-treating comprises heat-treating he precursor mixture by the solid-state reaction to prepare carbon nanotube-olivine type lithium manganese phosphate composites. In order to prevent a metal precursor such as manganese (Mn) from being oxidized, the heat-treating may be performed under reducing atmosphere. The reducing atmosphere may be created using nitrogen gas, argon gas, hydrogen gas and mixed gases thereof. The heat-treating may be performed at a temperature of 500 to 900 °C, preferably 550 to 700 °C, for 6 to 20 hours. The heat-treating may be performed by making the precursor mixture into powder state or pellets. In order to facilitate smooth dispersion of particles during the heat-treating, the precursor mixture is preferably made into pellets. The pellets may be formed by maintaining the precursor mixture under a pressure of 1,000 to 2,000 psi for 0.5 to 5 minutes.

After the heat-treating, the preparation method may further include grinding or pulverizing to control particle sizes of the composites and remove impurities from the composites.

In the carbon nanotube-olivine type lithium manganese phosphate separator prepared by the preparation method described above, the olivine type lithium manganese phosphate may be represented by the Formula [1]:

LiMn₍₁₋ₓ₎MₓPO₄ [1]

wherein M is at least one element selected from the group consisting of Ni, Fe, Zr, Co, Mg, Mo, Al, Ag, Y and Nb, and 0≤x <1.

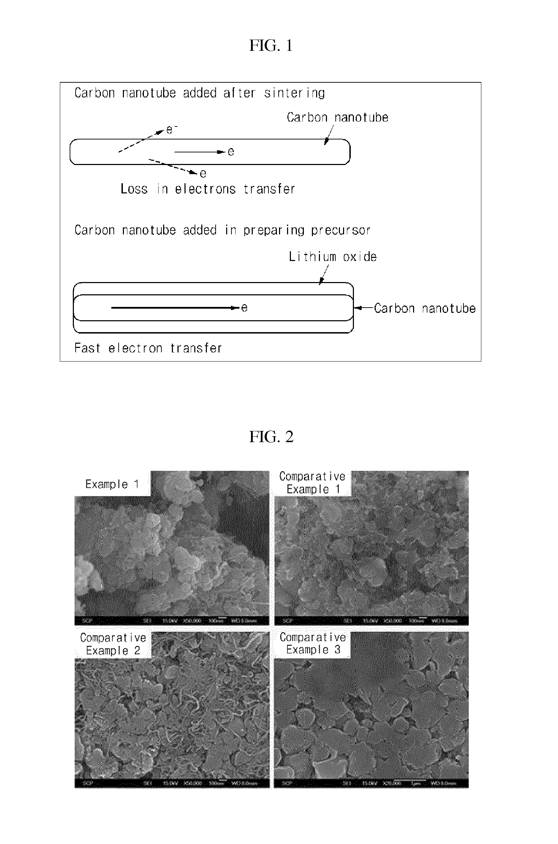

The prepared carbon nanotube-olivine type lithium manganese phosphate separator provides facilitated electron transfer between oxide particles positioned along the length of nanotube through the carbon nanotube. In addition, since carbon nanotube is added before sintering, a surface of the nanotube is lithiated, thereby improving electric conductivity of olivine type lithium manganese phosphate and greatly improving the capacity per weight. In more detail, if the carbon nanotube is added before sintering a metal precursor compound and then heat-treated, lithium oxide, which is a non-conducting material, is coated on wall surfaces of the carbon nanotube, and a loss in electrons transfer between composites can be reduced, thereby improving electron transfer efficiency (FIG. 1).

The present invention provides a positive electrode composition including the carbon nanotube-olivine type lithium manganese phosphate composites.

The positive electrode composition may include carbon black or carbon nanotube as a conductive agent. The carbon nanotube may be carbon nanotube acid-treated by the above-described process. In addition, the carbon nanotube may be a dispersion solution of 5 to 10 wt% carbon nanotube dispersed by ultrasonic dispersion in NMP (N-Methyl-2-pyrrolidone) solution for 30 minutes to 1 hour. The dispersion solution has a viscosity of 8,000 to 12,000 cPs (mPa.s). The carbon nanotube-olivine type lithium manganese phosphate composites and the conductive agent may be contained in the positive electrode composition in a ratio of 90:10 to 99:1 (by mass).

The positive electrode composition may further include a binder. Any binder that is used in the related art of the invention can be used without limitation, and preferred examples thereof include polyvinylidene fluoride (PVDF), polytetrafluoroethylene, polyvinylchloride, polyvinylpyrollidone, polyvinyl alcohol, carboxymethylcellulose (CMC), starch, hydroxypropylcellulose, polyethylene, polypropylene, styrene butadiene rubber, fluoro rubber, and so on.

The carbon nanotube-olivine type lithium manganese phosphate separator and the binder may be contained in the positive electrode composition in a ratio of 90:10 to 99:1 (by mass).

The positive electrode composition may be prepared by selectively adding olefin-based polymer of a solvent such as NMP and polyethylene or polypropylene, and filler made of a fibrous material such as glass fiber or carbon fiber to the positive active material and the binder.

The present invention provides a lithium secondary battery using the positive electrode composition.

The lithium secondary battery may include a positive electrode made of the positive electrode composition, a negative electrode, a separator and a nonaqueous electrolyte. The configuration and preparation method of the secondary battery are known in the related art of the invention and can be appropriately selected without deviating the scope of the present invention.

The positive electrode may be prepared by coating the positive electrode composition according to the present invention on a positive electrode current collector, drying and rolling the resultant product.

Examples of the positive electrode current collector include copper, stainless steel, aluminum, nickel, titanium, sintered carbon, aluminum or stainless steel that is surface-treated with carbon, nickel, titanium, or silver, and aluminum-cadmium alloy. The positive electrode current collector may be used in any of various forms including films, sheets, foils, nets, porous structures, foams, and non-woven fabrics.

The negative electrode may be manufactured as follows. For example, a negative active material, a binder, a solvent, and a conducting agent may be mixed to prepare a negative active material composition. The negative active material composition may be coated on a negative electrode current collector and dried. The negative electrode may be formed of a lithium metal. Optionally, the negative active material composition may further include a binder, a conductive agent and so on.

Examples of the negative active material include carbon materials, such as artificial graphite, natural graphite, graphitized carbon fiber or amorphous carbon, lithium, alloys between lithium and silicon (Si), Al, tin (Sn), lead (Pb), Zn, bismuth (Bi), indium (In), Mg, gallium (Ga), or cadmium (Cd), an alloyable metallic compound such as Sn alloy and Al alloy, and a composite including the metallic compound and the carbonaceous material.

Examples of the negative electrode current collector include copper, stainless steel, aluminum, nickel, titanium, sintered carbon, copper or stainless steel that is surface-treated with carbon, nickel, titanium, or silver, and aluminum-cadmium alloy. The negative electrode current collector may be used in any of various forms including films, sheets, foils, nets, porous structures, foams, and non-woven fabrics.

The separator may be positioned between the positive electrode and the negative electrode. Examples of materials used to form the separator include olefin-based polymer, such aspolypropylene, or a sheet or woven fabric made of glass fiber or polyethylene. For example, the separator may include a film formed of polyethylene, polypropylene, polyvinylidene fluoride (PVDF), or a multi-layered film of two or more layers thereof, or a combined multi-layered film, such as a polyethylene/polypropylene 2-layered separator, a polyethylene/polypropylene/ polyethylene 3-layered separator, or a polypropylene/polyethylene/polypropylene 3-layered separator.

The nonaqueous electrolyte may be an electrolyte having a lithium salt dissolved therein. Examples of the lithium salt include LiCl, LiBr, Lil, LiClO₄, LiBF₄, LiB₁₀OCl₁₀, LiPF₆, UCF₃SO₃, LiCF₃CO₂, LiAsF₆, LiSbF₆, LiAlCl₄, CH₃SO₃Li, CF₃SO₃Li, (CF₃SO₂)₂NLi, or chloroboran lithium.

The nonaqueous electrolyte may include a nonaqueous organic solvent, an organic solid electrolyte, an inorganic solid electrolyte, and so on. Examples of the nonaqueous organic solvent include ethylene carbonate, propylene carbonate, butylene carbonate, vinylene carbonate, dimethyl carbonate, methylethyl carbonate,diethyl carbonate, acetic methyl, acetic ethyl, acetic propyl, propionic methyl, propionic ethyl, γ-butyrolactone, 1,2-dimethoxyethane, 1,2-diethoxyethane, tetrahydrofuran, 1,2-dioxane, 2-methyl tetrahydrofuran, acetonitrile, dimethylformamide, N-methyl-2-pyrrolidinone, dimethylsulfoxide, 1,3-dimethyl-2-imidazolidinone, sulforan, methyl sulforan, and so on.

The organic solid electrolyte may include a gel-phase polymer electrolyte prepared by impregnating an electrolyte in a polymer such as polyethylene oxide or polyacrylonitrile.

The inorganic solid electrolyte may be nitrides, halides, or sulfates of Li, such as Li₃N, Lil, Li₅Nl₂, Li₃N-LiI-LiOH, LiSiO₄, LiSO₄-Lil-LiOH, Li₂SiS₃, Li₄SiO₄, Li₄SiO₄-Lil-LiOH, or Li₃PO₄-Li₂S-SiS₂ and so on.

The lithium secondary battery may be divided into a coin type, a prismatic type, a cylindrical type, a pouch type, and so on. Since the configuration and preparation method of each type lithium secondary battery are known in the related art of the invention, a detailed description thereof is omitted.

The following Examples and Comparative Examples further describe the present invention in more detail. However, the present invention shall not be limited by these Examples and Comparative Examples.

### [Example 1]

### Carbon nanotube-olivine type lithium manganese phosphate composites

Acid treatment is performed such that a multi-walled carbon nanotube formed by chemical vapor deposition (CVD) (CM-250 commercially available from Hanhwa Nanotec, Co., Korea) is fully immersed in a 3M acid solution in a ratio of sulfuric acid to nitric acid being 3:1 (w/w) and stirred at 60 to 80°C for 8 to 12 hours. After the acid treatment, the resultant product was washed with distilled water and dried in an oven maintained at a temperature of lower than 100°C. The dried carbon nanotube has purity of approximately 95%, and a peak intensity ratio of 1.18, measured around 1580⁻¹ peak (I_{G}) and 1350 cm⁻¹ peak (I_{D}), was confirmed by Raman spectroscopy (1024 nm laser wavelength). Next, lithium carbonate (Li₂CO₃, 0.739g), manganese carbonate (MnCO₃, 1.839g), ammonium phosphorate (NH,·H₂PO₄, 2.300g), iron oxalate (FeC₂O₄·2(H₂O), 0.720g), and acid-treated multi-walled carbon nanotube (0.33g) in an amount of 6wt% based on the total weight of the metal precursor, were mixed by a ball mill under nitrogen atmosphere. A pressure of 2,000 psi was applied to the mixed precursor particles for 1 to 5 minutes to prepare pellets having a diameter of 6 mm and a height of 7 mm. The pellets were heated at a temperature of 600°C (the temperature elevating at a rate of 2°C/min) under nitrogen atmosphere for 12 hours and finally pulverized, thereby preparing the carbon nanotube- olivine type lithium manganese phosphate separator.

The prepared carbon nanotube- olivine type lithium manganese phosphate separator, Super P as a conductive agent and PVDF as a binder were mixed in a ratio of 90:5:5 (by mass), the mixture was coated on an aluminum (Al) foil coated with carbon black to a thickness of 150 µm, thereby manufacturing an electrode plate. The manufactured electrode plate was then subjected to roll pressing to compress the same to a thickness of 30 to 50 µm. Lithium metal as a negative electrode and 1.3M LiPF₆ dissolved in a mixed solution of ethylene carbonate (EC)/ dimethylcarbonate (DMC)/EC (in a ratio of 5:3:2 by weight) as an electrolyte were used to manufacture a coin cell.

### [Example 2]

The olivine type lithium manganese phosphate separator of Example 1 as a positive active material, Super P as a conductive agent, acid-treated MWNT, and PVDF as a binder were mixed in a ratio of 90:2.5:2.5:5, and the resultant mixture was coated on an aluminum (Al) foil coated with carbon black, thereby manufacturing an electrode plate. Lithium metal as a negative electrode and 1.3M LiPF₆ dissolved in a mixed solution of EC/DMC/EC (in a ratio of 5:3:2 by weight) as an electrolyte were used to manufacture a coin cell. Here, 5.03wt% of the MWNT is dispersed in an NMP solution by ultrasonic dispersion. The MWNT was acid-treated in the same manner as in Example 1. Here, the ultrasonic dispersion was performed at 40°Cfor approximately 1 hour.

### [Comparative Example 1]

A coin cell was manufactured in substantially the same manner as in Example 1, except that in mixing the precursor, carbon black (Ketjen black) was used in an amount of 6wt% based on the total weight of the metal precursor.

### [Comparative Example 2]

A coin cell was manufactured in substantially the same manner as in Example 1, except that the olivine type lithium manganese phosphate composite was prepared without using carbon nanotube, and the prepared olivine type lithium manganese phosphate composite and the acid-treated carbon nanotube of Example 1 were mixed and further mixed with Super P, MWNT, and PVDF.

### [Comparative Example 3]

A coin cell was manufactured in substantially the same manner as in Example 1, except that carbon nanotube was not acid-treated and then used.

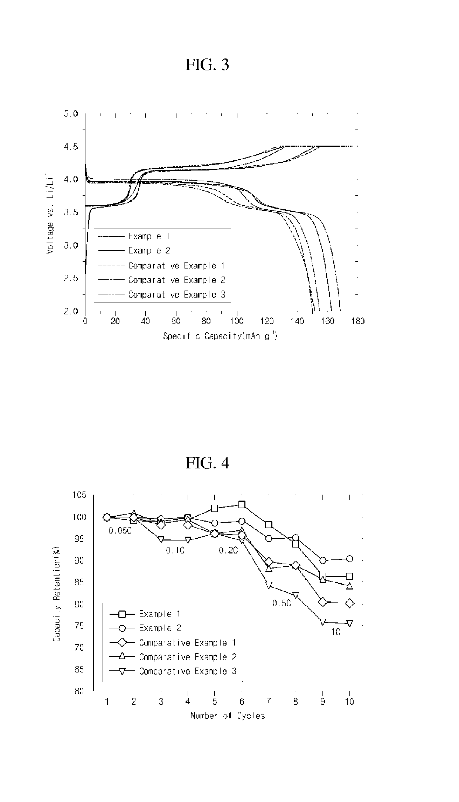

SEM images of the olivine type lithium manganese phosphate composites prepared in Examples and Comparative Examples were observed and the electrode plate densities and capacities of the coin cells manufactured in Examples and Comparative Examples were measured, and the results thereof are listed in Table 1 and FIGS. 2 to 4.

**Table 1**

| | Battery capacity (mAh/g) | Rate characteristic (1C/0.1C,%) | Lifetime characteristic (%) |
|---|---|---|---|
| Example 1 | 169 | 88 | 90 |
| Example 2 | 164 | 90 | 93 |
| Comparative Example 1 | 155 | 82 | 84 |
| Comparative Example 2 | 152 | 84 | 84 |
| Comparative Example 3 | 151 | 80 | 77 |

As confirmed from Table 1 and FIGS. 2 to 4, since the carbon nanotube-olivine type lithium manganese phosphate composite according to the present invention uses acid-treated carbon nanotube, it can be dispersed well in oxides and improves the efficiency of electron transfer between the oxides, thereby providing high battery capacity. In addition, since the carbon nanotube-olivine type lithium manganese phosphate composite according to the present invention uses carbon nanotube having a relatively specific surface area, compared to conventionally used carbon black, electrolyte wetting can be facilitated and the rate characteristic and capacity retention ratio of the positive active material can be improved. In addition, adhesion between an electrode plate and a current collector can be improved in the manufacture of an electrode by adhesion of the carbon nanotube itself, thereby improving the safety of the active material and cycle lifetime characteristic of battery.

## Claims

1. A method of preparing carbon nanotube-olivine type lithium manganese phosphate composites, the method comprising:
acid-treating a carbon nanotube to purify the carbon nanotube by adding an acid solution to the carbon nanotube;
forming a precursor mixture of the carbon nanotube and a metal precursor of olivine type lithium manganese phosphate; and
heat-treating the precursor mixture.

2. The method of claim 1, wherein the lithium manganese phosphate is represented by the Formula [1]:
LiMn₍₁₋ₓ₎MₓPO₄ [1]
wherein M is at least one element selected from the group consisting of Ni, Fe, Zr, Co, Mg, Mo, Al, Ag, Y and Nb, and 0≤x <1.

3. The method of claim 1 or 2, wherein the acid-treating of the carbon nanotube comprises agitating the carbon nanotubewith the acid solution at a temperature of 60 to 80 °C for 8 to 12 hours.

4. The method of one of the preceding claims, wherein the acid solution includes at least one of sulfuric acid, nitric acid and chloric acid and is an acidic solution having a mole concentration of 1 to 6 M.

5. The method of one of the preceding claims, wherein the preparing the precursor mixture comprises mixing carbon nanotube in an amount of 1 to 10 wt% based on the weight of the metal precursor.

6. The method of one of the preceding claims, wherein the heat-treating is performed at a temperature in a range of 550 to 900 °C for 6 to 12 hours.

7. The method of one of the preceding claims, wherein the carbon nanotube has an average diameter of 1 nm or greater and an average length of 10 µm or greater.

8. A positive electrode composition comprising the carbon nanotube-olivine type lithium manganese phosphate composites prepared by the method of one of the preceding claims.

9. The composition of claim 8, further comprising at least one of carbon black and carbon nanotube.

10. The composition of claim 9, wherein the carbon nanotube is acid-treated in an acid solution having a mole concentration of 1 to 6 M.

11. A lithium secondary battery manufactured using the positive electrode composition of one of claims 8 to 10.
